## Europäisches Patentamt
## European Patent Office
## Office européen des brevets

(11) Veröffentlichungsnummer: **0 178 471**
**B1**

(12) # EUROPÄISCHE PATENTSCHRIFT

(45) Veröffentlichungstag der Patentschrift:
27.04.88

(51) Int. Cl.⁴: **B 23 K 33/00**

(21) Anmeldenummer: **85111658.2**

(22) Anmeldetag: **14.09.85**

(54) Schweissverbindung.

(30) Priorität: **16.10.84 DE 3437823**

(43) Veröffentlichungstag der Anmeldung:
**23.04.86 Patentblatt 86/17**

(45) Bekanntmachung des Hinweises auf die Patenterteilung:
**27.04.88 Patentblatt 88/17**

(84) Benannte Vertragsstaaten:
**DE FR GB IT**

(56) Entgegenhaltungen:
**DE-B-1 095 089**

(73) Patentinhaber: **Borsig GmbH, Berlinerstrasse 27- 37, D-1000 Berlin 27 (DE)**

(72) Erfinder: **Pape, Rolf, Taunusstrasse 15, D-1000 Berlin 41 (DE)**

(74) Vertreter: **Müller, Jürgen, Dipl.- Ing., Deutsche Babcock AG Lizenz- und Patentabteilung Duisburger Strasse 375, D-4200 Oberhausen 1 (DE)**

EP 0 178 471 B1

## Beschreibung

Die Erfindung betrifft eine Schweißverbindung zwischen zwei aneinander stoßende Bauteile mit den Merkmalen des Oberbegriffes des Anspruches 1.

Eine solche Schweißverbindung ist aus der DE-B-1 095 089 bekannt. Der der Zentrierung der Bauteile dienende Vorspannung ist so ausgebildet, daß er sich durch die eingebrachte Schweißwärme verformt, damit die Schweißnaht frei von Spannungen bleibt. Weiterhin begrenzt der Vorsprung die Schweißfuge, so daß eine Durchschweißung der Schweißnaht nicht möglich ist. Eine solche Durchschweißung ist aber für hochbeanspruchte Konstruktionsteile unbedingt erforderlich

Aus der DE-C-1 298 386 ist ein Schweißverfahren für Stumpfnähte bekannt geworden, bei dem in einem ersten Arbeitsgang die Wurzel in einem verhältnismäßig dünnen Wurzelbereich geschweißt wird. Anschließend wird in einem zweiten Arbeitsgang die restliche Fuge mit einer abschmelzenden Lichtbogenelektrode ausgefüllt. Auf diese Weise gelingt es, eine durchgeschweißte Naht zu schaffen, ohne daß zwischenzeitliche oder nachfolgende mechanische Bearbeitungen notwendig sind, jedoch läßt sich bei diesem Verfahren nicht ohne weiteres der durch das Schweißen bedingte Schrumpf und das Zentrieren der zu verschweißenden Bauteile in einfacher Weise beherrschen.

Der Erfindung liegt die Aufgabe zugrunde, die gattungsgemäße Schweißverbindung derart zu gestalten, daß die zu verschweißenden Bauteile in einfacher Weise zu zentrieren sind und daß der Schrumpf in einem engen Toleranzbereich gehalten werden kann.

Diese Aufgabe wird bei einer gattungsgemäßen Schweißverbindung durch die kennzeichnenden Merkmale des Anspruches 1 gelöst. Eine vorteilhafte Ausgestaltung der Erfindung ist in Unteranspruch 2 angegeben.

Bei dieser Schweißverbindung dienen die der Schweißnaht zugewandten Flächen des Druckstückes dem Zentrieren der Bauteile beim Zusammenfügen. Die in Richtung der Schweißverbindung liegenden Stoßkanten von Druckstück und Bauteil fangen den Schrumpf der Schweißnaht auf und machen ihn damit berechenbar. Der Hohlraum zwischen der Schweißnaht und dem Druckstück sorgt für eine vollständige Durchschweißung.

Ein Ausführungsbeispiel der Erfindung ist in der Zeichnung dargestellt und wird im folgenden näher erläutert.

Es zeigen:

Fig. 1 die Bauteile ausschnittsweise im auseinandergezogenen Zustand.

Fig. 2 die Bauteile im zusammengefügten Zustand und

Fig. 3 die Bauteile im miteinander verschweißten Zustand,

Zwei durch eine Rund- oder Längsnaht miteinander zu verbindende Bauteile 1, 2 stellen hoch beanspruchte Konstruktionsteile, zum Beispiel an Druckbehältern dar. Die Bauteile 1, 2 können eben, zylindrisch oder, wie im vorliegenden Fall, vorzugsweise halbkugelförmig gewölbt sein. Im Bereich der späteren Schweißverbindung sind die Bauteile 1, 2 mit einer Schweißfuge 3 versehen. Die Schweißfuge 3 besteht aus einem eine Wurzelnaht bildenden I-Stoß 4 und einem darüber liegenden Teil mit tulpenförmigen Flanken 5. Anstelle der I-Stoßes 4 kann insbesondere bei Handschweißungen auch ein V-Stoß verwendet werden.

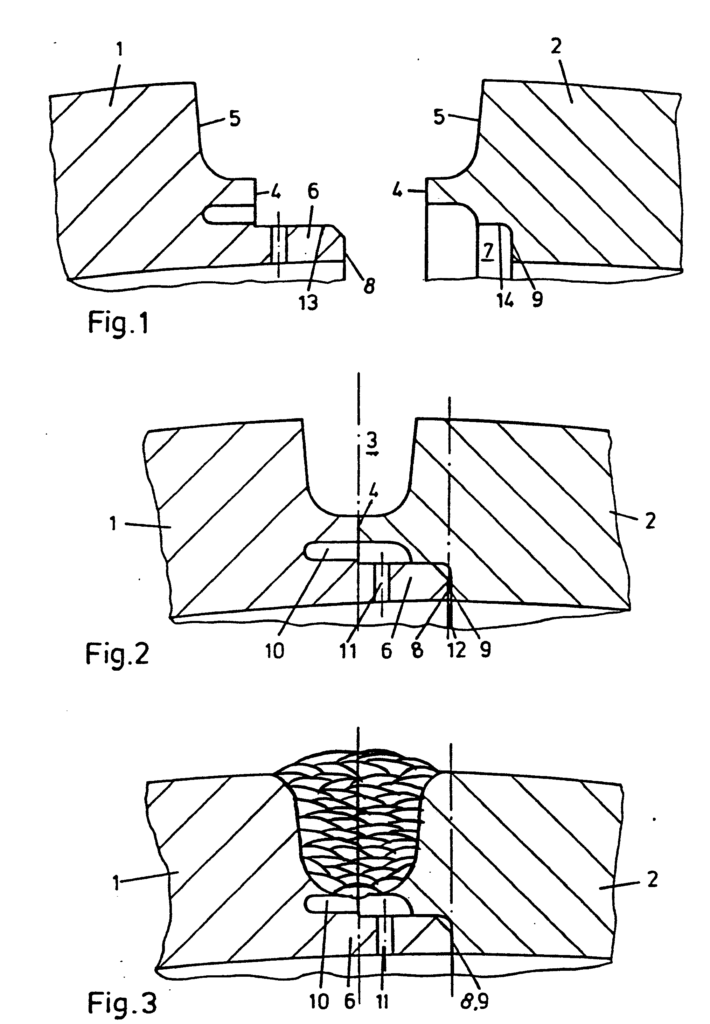

Unterhalb der Schweißfuge 3 ist zwischen den Bauteilen 1, 2 ein Druckstück vorgesehen. Das Druckstück kann aus einem lippenartigen Vorsprung 6 bestehen, der an das eine Bauteil 1 angeformt ist. Das andere Bauteil 2 ist mit einer Ausnehmung 7 versehen. Die Ausnehmung 7 ist der Form des Vorsprunges 6 angepaßt, so daß sie im Zusammengefügten Zustand der Bauteile 1, 2 (Fig. 2) den Vorsprung 6 übergreift. Dabei stellt der Vorsprung 6 die untere Begrenzung der Verbindungsstelle der beiden Bauteile 1, 2 dar. Die Stirnfläche des Vorsprungs 6 und die ihr gegenüberliegende Fläche des Ausnehmung 7 bilden Stoßkanten 8, 9 an denen im verschweißten Zustand die Bauteile 1, 2 aneinanderliegen. Bei Verbindungsstellen mit einem zylindrischen Querschnitt können beide Bauteile 1, 2 mit je einer Ausnehmung 7 versehen sein, in die ein angepaßter, als Druckstück dienender von den Bauteilen 1, 2 getrennter Ring eingreift.

Zwischen der Schweißfuge 3 und dem lippenartigen Vorsprung 6 des Bauteils 1 ist ein Abstand eingehalten. Auf diese Weise wird ein von den Bauteilen 1, 2 umschlossener Hohlraum 10 gebildet. Der Vorsprung 6 des Bauteils 1 ist in Verlängerung der Mittenachse der Schweißfuge 3 von einer oder mehreren über den Umfang des Bauteils verteilten Durchtrittsbohrungen 11 durchdrungen, die den Hohlraum 10 mit der der Schweißfuge 3 abgewandten Seite des Bauteils verbinden. Die Durchtrittsöffnungen 11 können zum Beispiel wie dargestellt, durch Bohrungen in dem Vorsprung 6 oder durch Nuten in der Stirnseite des Vorsprungs 6 gebildet sein.

Die mit der beschriebenen Schweißfuge 3 und den Stoßkanten 8, 9 versehenen Bauteile 1, 2 werden, wie in Fig. 2 dargestellt ist, zusammengefügt. Dabei sollen die Bauteile 1, 2 bevorzugt an dem I-Stoß 4 zusammenstoßen. Um das zu erreichen, sind der Vorsprung 6 und die Ausnehmung 7 so lang ausgebildet, daß zunächst ein Spalt 12 zwischen den Stoßkanten 8, 9 der Bauteile 1, 2 bestehen bleibt. Die Größe des Spaltes 12 soll entsprechend den Fertigungstoleranzen möglichst gering sein, andererseits aber gewährleisten, daß an dem I-Stoß 4 eine Berührung der Bauteile 1, 2 besteht. Bei dem Zusammenfügen der Bauteile 1, 2 gleitet die der Schweißfuge 3 zugewandte Fläche 13 des Vorsprungs 6 an der entsprechenden Fläche 14 der Ausnehmung 7 entlang, wodurch die Bauteile 1, 2 zentriert werden.

Nach dem Zusammenfügen der Bauteile 1, 2 wird in einem ersten Arbeitsgang im Bereich des I-Stoßes 4 eine Wurzellage zum Beispiel nach dem Wolfram-Inertgas-Schweißverfahren (WIG) geschweißt. Durch den durch den Hohlraum 10 gegebenen Abstand des I-Stoßes 4 von dem Vorsprung 6 wird eine vollständige Durchschweißung der Wurzellage erreicht. Dabei kann Gas aus dem Hohlraum 10 durch die Durchtrittsöffnungen 11 entweichen. Anschließend wird die restliche Fuge, zum Beispiel nach dem Unter-Pulver-Schweißverfahren ausgefüllt. Die bereits geschweißte Wurzellage dient dabei der Schweißbadsicherung. In dem erkalteten Zustand liegen aufgrund der Schrumpfung der Schweißnaht in Fuge 3 die Stoßkanten 8, 9 nach Überwindung des Spaltes 12 dicht aneinander. Über den in die Ausnehmung 7 eingreifenden Vorsprung 6 wird auf diese Weise der Schrumpf aufgefangen und damit berechenbar gemacht.

**Patentansprüche**

1. Schweißverbindung zwischen zwei aneinander stoßenden Bauteilen (1, 2), die eine durch eine Schweißnaht ausgefüllte Schweißfuge (3) umfaßt, unterhalb der ein lippenartiger Vorsprung (6) vorgesehen ist, der an das eine Bauteil (1) angeformt und in eine Ausnehmung (7) in dem anderen Bauteil (2) eingreift, wobei der Vorsprung (6) als Druckstück ausgebildet ist, dadurch gekennzeichnet daß unmittelbar unterhalb der Schweißfuge (3) ein Hohlraum (10) gebildet ist, der etwa die gleiche Breite wie die Schweißfuge hat, wobei der Hohlraum auf der Schweißfuge (3) abgewandten Seite durch den Vorsprung (6) begrenzt ist und daß die Schweißfuge (3) mit einer mehrlagigen Schweißnaht gefüllt ist.

2. Schweißverbindung nach Anspruch 1, dadurch gekennzeichnet, daß der Vorsprung (6) in Richtung der Mittenachse der Schweißfuge (3) von einer oder mehreren Durchtrittsöffnungen (11) durchdrungen ist.

**Claims**

1. Welded connection between two mutually abutting components (1, 2), which comprises a welding joint rabbet (3), which is filled out by a welding seam and below which is provided a lip-like projection (6), which is shaped on at the one component (1) and engages into a recess (7) in the other component (7), wherein the projection (6) is constructed as thrust piece, characterised thereby, that a hollow space (10) is formed directly below the welding joint rabbet (3) and has about the same width as the welding joint rabbet, wherein the hollow space is bounded by the projection (6) on the side remote from the welding joint rabbet (3) and that the welding joint rabbet (3) is filled by a multi-layer welding seam.

2. Welded connection according to claim 1, characterised thereby, that the projection (6) is penetrated by one or more passage openings (11) in the direction of the centre line of the welding joint rabbet (3).

**Revendications**

1. Soudure bout à bout de deux pièces de construction (1, 2) comportant un joint de soudure (3) rempli par un cordon de soudure au dessous duquel est prévu un rebord (6) en forme de lèvre formé sur l'une des pièces de construction (1) et s'engageant dans un évidement (7) représenté par l'autre pièce de construction (2), le rebord (6) étant conformé en élément d'appui, caractérisée en ce qu'un espace vide (10) ayant à peu près la même largeur que le joint de soudure est constitué, directement au-dessous du joint de soudure (3), l'espace vide étant limité, du côté opposé au joint de soudure (3), par le rebord (6), et en ce que le joint de soudure (3) est rempli par un cordon de soudure à plusieurs couches.

2. Soudure selon la revendication 1, caractérisée en ce que le rebord (6) est traversé, dans la direction de l'axe médian du joint de soudure (3), par une ou plusieurs ouvertures de passage (11).

Fig.1

Fig.2

Fig.3